# EUROPEAN PATENT APPLICATION

(11) **EP 4 617 891 A1**
(43) Date of publication of application: **17.09.2025**
(21) Application number: 23888488.6
(22) Date of filing: 24.10.2023
(51) Int. Cl.: G06F 13/366

(54) **INFORMATION PROCESSING SYSTEM, INFORMATION PROCESSING DEVICE, AND INFORMATION PROCESSING METHOD**

(30) Priority: 07.11.2022 JP 2022177967
(71) Applicant: Sony Semiconductor Solutions Corporation, Atsugi-shi, Kanagawa 243-0014 (JP)
(72) Inventor: NAKAHARA, Daisaku, Kikuchi-gun, Kumamoto 869-1102 (JP)
(74) Representative: MFG Patentanwälte Meyer-Wildhagen Meggle-Freund Gerhard PartG mbB
(86) International application number: PCT/JP2023/038250
(87) International publication number: WO 2024/101138

(57) **Abstract**

An information processing system according to an embodiment of the present disclosure includes: a transmission unit that transmits an adjustment pulse signal during a blanking period related to video data; a detection unit that detects that a duty ratio of the adjustment pulse signal transmitted by the transmission unit is not a predetermined value; an adjustment unit that acquires a correction value in such a manner that the duty ratio of the adjustment pulse signal becomes the predetermined value in a case where the detection unit detects that the duty ratio of the adjustment pulse signal is not the predetermined value; and a correction unit that corrects a duty ratio of a pulse signal related to the video data on the basis of the correction value acquired by the adjustment unit.

## Description

### Field

The present disclosure relates to an information processing system, an information processing device, and an information processing method.

### Background

In recent years, in electronic equipment such as a mobile product, a signal transfer speed has been remarkably increased. Along with this, a level of required signal quality is becoming stricter. For example, an image sensor may be mounted on the electronic equipment. The image sensor converts video data captured in pixels into serial signals and performs transmission thereof to an application processor in a subsequent stage. In addition, in order to control jitter that is one of factors that deteriorate the signal quality, improvement of accuracy with respect to a duty ratio (duty cycle) of a pulse signal flowing through a transmission path is required. Thus, Patent Literature 1 discloses a technology of providing an idle period, and adjusting a duty ratio of a pulse signal flowing through a transmission path and searching for an optimum value while changing a parameter by using a register during the idle period.

### Citation List

### Patent Literature

Patent Literature 1: Japanese Patent Application Laid-open No. 2022-49407

### Summary

### Technical Problem

However, in the above-described technology, since it is necessary to separately provide an idle period, high-speed data processing is difficult. In addition, it is not clear how frequently a duty ratio is adjusted, and an appropriate duty ratio may fluctuate according to a change in a use environment of electronic equipment. Thus, it is difficult to acquire an appropriate duty ratio.

Thus, the present disclosure provides an information processing system, an information processing device, and an information processing method capable of realizing high-speed data processing and further acquiring an appropriate duty ratio.

### Solution to Problem

An information processing system according to an embodiment of the present disclosure includes: a transmission unit that transmits an adjustment pulse signal during a blanking period related to video data; a detection unit that detects that a duty ratio of the adjustment pulse signal transmitted by the transmission unit is not a predetermined value; an adjustment unit that acquires a correction value in such a manner that the duty ratio of the adjustment pulse signal becomes the predetermined value in a case where the detection unit detects that the duty ratio of the adjustment pulse signal is not the predetermined value; and a correction unit that corrects a duty ratio of a pulse signal related to the video data on a basis of the correction value acquired by the adjustment unit.

An information processing device according to an embodiment of the present disclosure includes: a transmission unit that transmits an adjustment pulse signal during a blanking period related to video data; an adjustment unit that acquires a correction value in such a manner that a duty ratio of the adjustment pulse signal becomes a predetermined value according to detection information indicating that it is detected that the duty ratio of the adjustment pulse signal transmitted by the transmission unit is not the predetermined value; and a correction unit that corrects a duty ratio of a pulse signal related to the video data on a basis of the correction value acquired by the adjustment unit.

An information processing method according to an embodiment of the present disclosure includes: transmitting an adjustment pulse signal during a blanking period related to video data; detecting that a duty ratio of the transmitted adjustment pulse signal is not a predetermined value; acquiring a correction value in such a manner that the duty ratio of the adjustment pulse signal becomes the predetermined value in a case where it is detected that the duty ratio of the adjustment pulse signal is not the predetermined value; and correcting a duty ratio of a pulse signal related to the video data on a basis of the acquired correction value, transmitting, detecting, acquiring, and correcting being performed by an information processing system.

### Brief Description of Drawings

FIG. 1 is a view illustrating a configuration example of an information processing system according to an embodiment of the present disclosure.
FIG. 2 is a flowchart illustrating a flow of duty ratio correction processing according to the embodiment of the present disclosure.
FIG. 3 is a view for describing a simulation result example of the duty ratio correction processing according to the embodiment of the present disclosure.
FIG. 4 is a view illustrating a circuit configuration example of the information processing system according to the embodiment of the present disclosure.
FIG. 5 is a flowchart illustrating a flow of an operation example of the circuit configuration example of the information processing system according to the embodiment of the present disclosure.
FIG. 6 is a timing chart illustrating signal timing of the circuit configuration example of the information processing system according to the embodiment of the present disclosure.
FIG. 7 is a view illustrating a configuration example of an information processing system according to a first modification example.
FIG. 8 is a view illustrating a configuration example of an information processing system according to a second modification example.
FIG. 9 is a view illustrating a configuration example of an information processing system according to a third modification example.
FIG. 10 is a view illustrating a configuration example of an information processing system according to a fourth modification example.
FIG. 11 is a view illustrating an example of a schematic configuration of an imaging device.
FIG. 12 is a view illustrating an example of a schematic configuration of a distance measurement device.

### Description of Embodiments

In the following, embodiments of the present disclosure will be described in detail on the basis of the drawings. The embodiments also include examples, modification examples, and the like. Note that a system, device, equipment, method, and the like according to the present disclosure are not limited by the embodiments. Furthermore, in each of the following embodiments, overlapped description is omitted by assignment of the same reference sign to parts that are basically the same.

Each of the following one or more embodiments can be implemented independently. On the other hand, at least a part of the following plurality of embodiments may be implemented by being appropriately combined with at least a part of other embodiments. The plurality of embodiments may include novel features different from each other. Thus, the embodiments can contribute to solving different objects or problems, and can exhibit different effects. Note that an effect in each of the embodiments is merely an example and is not limited, and there may be another effect.

The present disclosure will be described in the following order of items.
1. Embodiment
1-1. Configuration example of an information processing system
1-2. Processing example of duty ratio correction processing
1-3. Example of a simulation result of the duty ratio correction processing
1-4. Circuit configuration example of the information processing system
1-5. Operation example of the circuit configuration example of the information processing system
1-6. First modification example of an information processing system
1-7. Second modification example of an information processing system
1-8. Third modification example of an information processing system
1-9. Fourth modification example of an information processing system
1-10. Action and effect
2. Other embodiments
3. Configuration example of electronic apparatus
3-1. Imaging device
3-2. Distance measurement device
4. Supplementary note

### <1. Embodiment>

### <1-1. Configuration example of an information processing system>

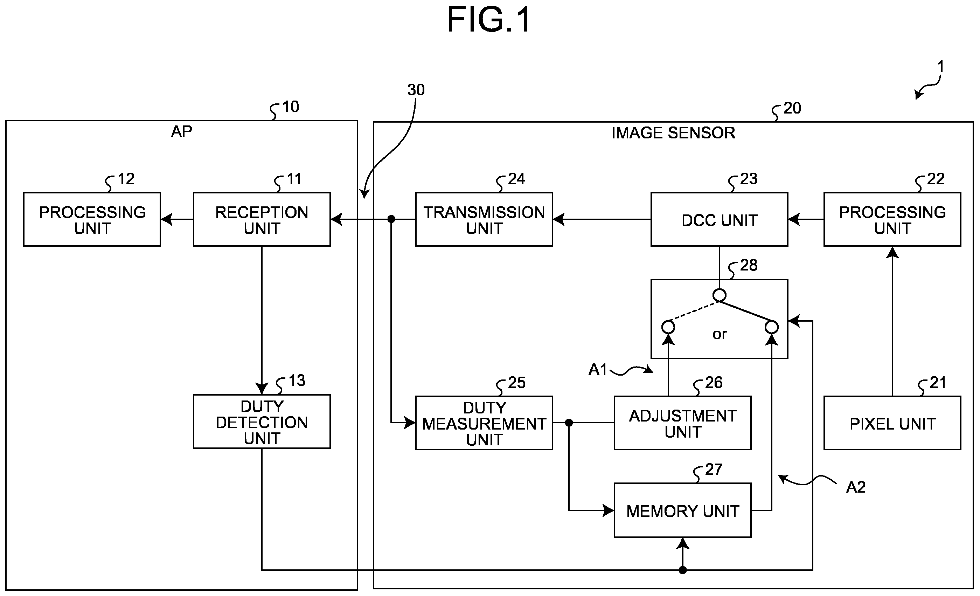

A configuration example of an information processing system 1 according to the present embodiment will be described with reference to FIG. 1. FIG. 1 is a view illustrating a configuration example of the information processing system 1 according to the present embodiment.

As illustrated in FIG. 1, the information processing system 1 according to the present embodiment includes an application processor 10 and an image sensor 20. The application processor 10 and the image sensor 20 are connected via a transmission path 30. An interface of the transmission path 30 conforms to a standard such as PCI Express (PCIe (registered trademark)), MIPI (registered trademark), Serial Attached SCSI (SAS), or Serial ATA (SATA).

The application processor 10 includes a reception unit 11, a processing unit 12, and a duty detection unit 13. The duty detection unit 13 functions as a detection unit.

The reception unit 11 receives a pulse signal (such as a pulse signal based on video data, an adjustment pulse signal, or the like) from the image sensor 20 via the transmission path 30, and performs an output thereof to the processing unit 12 and the duty detection unit 13.

The processing unit 12 processes the pulse signal output from the reception unit 11 (such as the pulse signal based on the video data). For example, the processing unit 12 executes an application and processes the pulse signal. As the application, for example, an application that executes various kinds of processing such as image processing can be used.

The duty detection unit 13 detects a duty ratio of the pulse signal (such as the adjustment pulse signal) output from the reception unit 11. For example, the duty detection unit 13 detects the duty ratio of the pulse signal by using an average pulse level (APL) of the pulse signal or a count value of a High (or Low) period of the pulse signal. Then, the duty detection unit 13 compares the detected duty ratio with a predetermined target value (such as an optimum value), does not output a flag signal (Low) to the image sensor 20 in a case where the duty ratio is the target value, and outputs a flag signal (High) to the image sensor 20 in other cases.

Note that the flag signal functions as detection information indicating that it is detected that the duty ratio of the pulse signal is not the target value. Although a binary pulse is used as the flag signal, this is not a limitation. For example, a multilevel signal, a PWM signal, or the like may be used. Since an ideal value of the duty ratio is 50%, the optimum value is desirably 50%, but may be around 50%. Furthermore, although being a predetermined value set in advance, the predetermined target value may be changeable, for example, when a user such as a designer performs input operation on an input unit (not illustrated). As the input unit, for example, various input devices such as keys and buttons can be used.

The image sensor 20 includes a pixel unit 21, a processing unit 22, a duty cycle correction unit (DCC unit) 23, a transmission unit 24, a duty measurement unit 25, an adjustment unit 26, a memory unit 27, and a switching unit 28. As the image sensor 20, for example, a complementary metal oxide semiconductor (CMOS) type imaging element (solid-state imaging device) can be used. Note that the DCC unit 23 functions as a correction unit.

The pixel unit 21 includes a plurality of pixels (not illustrated) each of which generates an image signal. These pixels are arranged in a two-dimensional lattice pattern, for example. Each of the pixels includes, for example, a photoelectric conversion element that performs photoelectric conversion of incident light, a charge holding unit that holds a charge generated by the photoelectric conversion, and the like. As the photoelectric conversion element, for example, a photodiode can be used. When light enters each of the pixels, each of the pixels generates the image signal and performs an output thereof to the processing unit 22. Data of these image signals for one screen is included in an image. The pixel unit 21 sequentially generates images (frames) at a predetermined frame frequency and performs an output thereof to the processing unit 22.

The processing unit 22 sequentially generates images (frames) at a predetermined frame frequency on the basis of the image signal output from the pixel unit 21, and outputs image data of each frame, that is, video data to the DCC unit 23. For example, the processing unit 22 converts video data in various formats (a plurality of pieces of image data) into serial data.

The DCC unit 23 corrects the duty ratio of the pulse signal (such as the pulse signal based on the video data, the adjustment pulse signal, or the like). For example, the DCC unit 23 corrects the duty ratio of the pulse signal on the basis of a control voltage at which the duty ratio becomes the predetermined target value (such as the optimum value). The control voltage functions as a correction voltage for correcting the duty ratio, that is, a correction value. For example, the DCC unit 23 adjusts a fall of a clock cycle to acquire a desired duty ratio on the basis of the control voltage. Note that various means can be used as a means by which the DCC unit 23 corrects the duty ratio of the pulse signal.

The transmission unit 24 transmits the pulse signal (such as the pulse signal based on the video data, the adjustment pulse signal, or the like) to the application processor 10 via the transmission path 30. The transmission unit 24 transmits, for example, the pulse signal (pulse signal of a random pattern) based on the video data (such as RGB data) in an active period. Furthermore, the transmission unit 24 transmits the adjustment pulse signal of a High/Low toggle pattern (pulse signal of a 0101 pattern) to the application processor 10 in a blanking period, for example. The High/Low toggle pattern is prepared in advance.

For example, although being a blanking period for each frame of the video data, the blanking period is not limited thereto, and may be another blanking period related to the video data. In addition, although being a predetermined signal set in advance, the adjustment pulse signal may be changeable when the user such as the designer performs input operation on the above-described input unit (not illustrated), for example. Note that the adjustment pulse signal is set to, for example, a signal having the duty ratio of the predetermined target value (such as the optimum value).

The duty measurement unit 25 measures the duty ratio of the pulse signal output from the transmission unit 24 to the transmission path 30, and performs an output thereof to the adjustment unit 26 and the memory unit 27. For example, the duty measurement unit 25 detects the duty ratio of the pulse signal by using the average pulse level (APL) of the pulse signal or the count value of the High (or Low) period of the pulse signal.

The adjustment unit 26 adjusts the duty ratio output from the duty measurement unit 25 to the predetermined target value (such as the optimum value). For example, the adjustment unit 26 controls the control voltage input to the DCC unit 23, and adjusts the duty ratio output from the duty measurement unit 25 to the target value. At this time, the adjustment unit 26 acquires the control voltage at which the duty ratio becomes the target value. The control voltage functions as, for example, the correction voltage for correcting the duty ratio.

The memory unit 27 holds voltage information related to the control voltage at which the duty ratio becomes the predetermined target value (such as the optimum value). The voltage information includes, for example, the control voltage at which the duty ratio becomes the target value. In addition, the memory unit 27 controls the switching unit 28 on the basis of the information of the flag signal (High) output from the application processor 10.

The switching unit 28 switches a signal path under the control of the memory unit 27. For example, under the control of the memory unit 27, the switching unit 28 switches a calibration path A1 passing through the duty measurement unit 25 and the adjustment unit 26, and a memory path A2 passing through the duty measurement unit 25 and the memory unit 27. That is, the switching unit 28 functions as a switch that switches the signal path to the DCC unit 23 and selects the control voltage to be input to the DCC unit 23. Note that the calibration path A1 functions as a first signal path, and the memory path A2 functions as a second signal path.

### <1-2. Processing example of duty ratio correction processing>

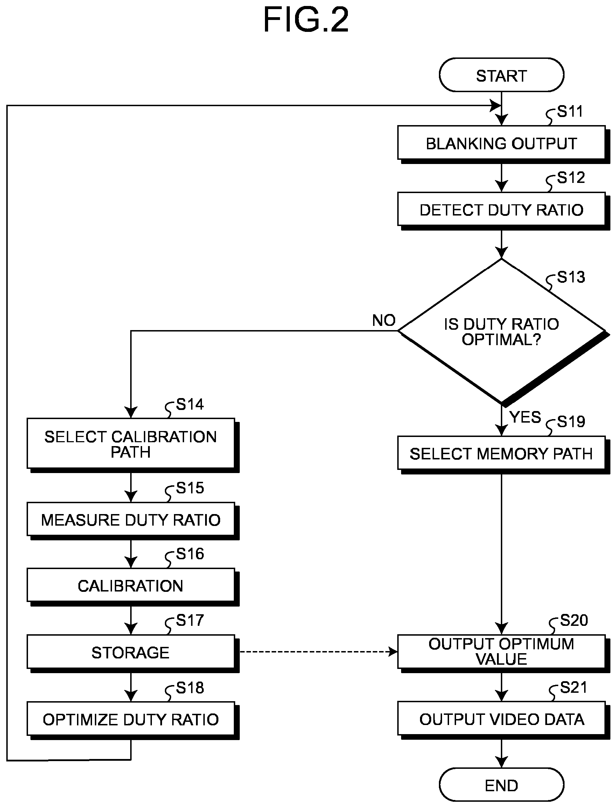

A processing example of the duty ratio correction processing according to the present embodiment will be described with reference to FIG. 2. FIG. 2 is a flowchart illustrating a flow of the duty ratio correction processing according to the present embodiment. In the example of FIG. 2, the predetermined target value is set to the optimum value (such as 50%).

As illustrated in FIG. 2, in Step S11, the transmission unit 24 of the image sensor 20 transmits the adjustment pulse signal of the H/L toggle pattern to the application processor 10 in the blanking period. The reception unit 11 of the application processor 10 receives the adjustment pulse signal output from the transmission unit 24, and outputs the received adjustment pulse signal to the duty detection unit 13.

In Step S12, the duty detection unit 13 detects the duty ratio of the pulse signal output from the reception unit 11. Thus, the duty detection unit 13 does not output the flag signal (Low) to the image sensor 20 in a case where the duty ratio is the optimum value (such as 50%), and outputs the flag signal (High) to the image sensor 20 in other cases.

In Step S13, the memory unit 27 determines whether the duty ratio is optimal on the basis of the flag signal (High). In a case where it is determined that the flag signal is High and the duty ratio is not optimal (No in Step S13), the switching unit 28 selects the calibration path A1 in accordance with an instruction from the memory unit 27 in Step S14.

In Step S15, the duty measurement unit 25 measures the duty ratio of the adjustment pulse signal. In Step S16, the adjustment unit 26 executes calibration in such a manner that the duty ratio measured by the duty measurement unit 25 becomes optimal, and acquires the control voltage at which the duty ratio becomes the optimum value.

In Step S17, the memory unit 27 stores the voltage information related to the control voltage acquired by the calibration. The voltage information includes the information related to the control voltage at which the duty ratio measured by the duty measurement unit 25 becomes the optimum value. In Step S18, the DCC unit 23 optimizes the duty ratio of the adjustment pulse signal on the basis of the control voltage acquired by the calibration, and returns the processing to Step S11.

On the other hand, in a case where it is determined in Step S13 that the duty ratio is optimal (Yes in Step S13), the switching unit 28 selects the memory path A2 in Step S19 according to an instruction from the memory unit 27, and advances the processing to Step S20.

In Step S20, the memory unit 27 outputs the optimum value of the control voltage included in the stored voltage information. In Step S21, the DCC unit 23 corrects the duty ratio on the basis of the optimum value of the control voltage output from the memory unit 27, and outputs the video data that is the pulse signal of the optimum duty ratio to the transmission unit 24. In response to this, the transmission unit 24 outputs the video data to the application processor 10.

### <1-3. Example of a simulation result of the duty ratio correction processing>

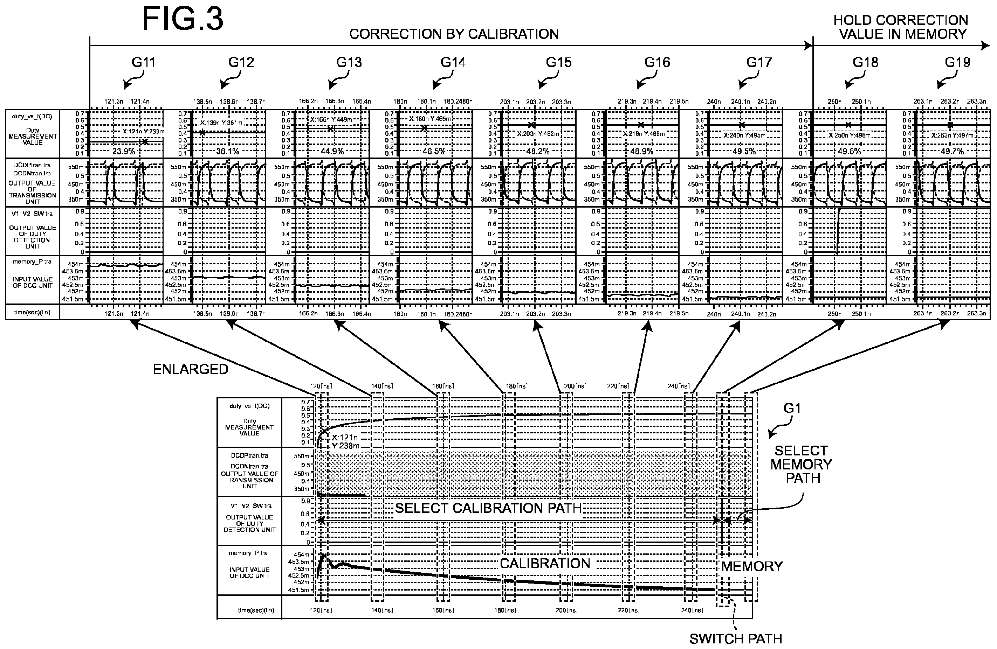

An example of a simulation result of the duty ratio correction processing according to the present embodiment will be described with reference to FIG. 3. FIG. 3 is a view for describing the example of the simulation result of the duty ratio correction processing according to the present embodiment. In the example of FIG. 3, a simulation circuit is generated on the basis of the information processing system 1 according to the present embodiment, and a simulation result by the simulation circuit is illustrated.

As illustrated in FIG. 3, a horizontal axis represents time (ns), and a vertical axis represents a Duty measurement value, an output value of the transmission unit, an output value of the duty detection unit, and an input value of the DCC unit. The Duty measurement value is the duty ratio measured by the duty measurement unit 25, and the output value of the transmission unit is an output value of a signal output from the transmission unit 24. The output value of the duty detection unit is an output value of a signal output from the duty detection unit 13, and the input value of the DCC unit is an input value of a signal input to the DCC unit 23. In addition, enlarged graphs G11 to G19 with respect to a graph G1 are illustrated. A part of the graph G1 is enlarged in every predetermined time range and the enlarged graphs G11 to G19 are formed.

The calibration path A1 and the memory path A2 are switched according to the output value from the duty detection unit 13 (such as the flag signal). When correction by the calibration is executed in a state in which the calibration path A1 is selected, the Duty measurement value gradually approaches 50%, which is the optimum value, from 23.9% at about 120 ns to 38.1%, 44.9%, 46.5%, 48.2%, 48.9%, 49.5%, and 49.8% with a lapse of time. When the time becomes about 250 ns and the Duty measurement value approaches 50%, the control voltage (optimum value) at which the duty ratio becomes appropriate is acquired. Then, the signal path is switched by the switching unit 28, and the memory path A2 is selected. The control voltage at which the duty ratio is appropriate is held by the memory unit 27.

According to such a simulation result, in a case where the duty ratio before the correction is about 45% or more, the information processing system 1 switches the calibration path A1 and the memory path A2 according to the output value (such as the flag signal) from the duty detection unit 13, and it can be seen that the time for leading the control voltage at which the duty ratio becomes appropriate is only several tens of ns. Thus, by utilizing the blanking period, it is possible to realize an interface of video data for which a high-speed operation of 60 Gbps is required, for example. In general, the duty ratio before the correction is rarely smaller than about 40%.

Currently, it is required that resolution/frame rate is 8K/60 fps and a data transfer speed is 18 Gbps. In the future, the resolution/frame rate is expected to be 8K/120 fps, the data transfer speed is required to be 36 Gbps or 60 Gbps, and the speed is expected to be increased. When this improvement in the data transfer speed can be realized, the number of lanes is reduced, and power saving of the transmission unit 24 is realized. Thus, speeding up is promoted. Note that a conventional duty correction circuit is below a specification of duty cycle jitter, and further improvement in performance is required. Jitter is a type of a variation amount of a transfer data edge, and a timing margin of a data reception end is reduced when the jitter is large.

### <1-4. Circuit configuration example of the information processing system>

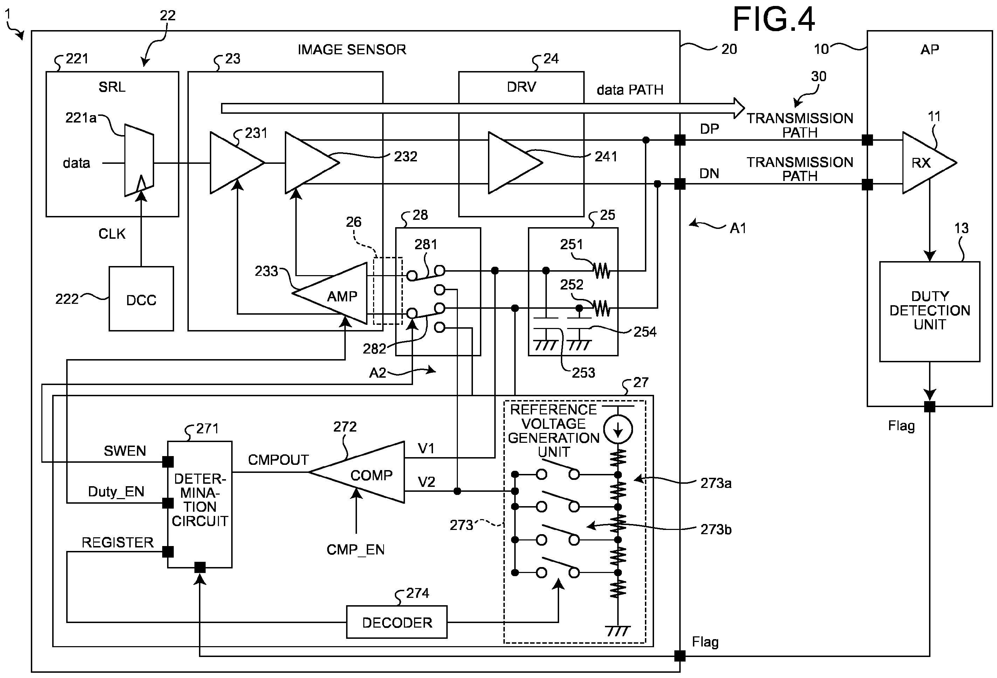

A circuit configuration example of the information processing system 1 according to the present embodiment will be described with reference to FIG. 4. FIG. 4 is a view illustrating the circuit configuration example of the information processing system 1 according to the present embodiment. In the example of FIG. 4, illustration of the pixel unit 21 and a part of the processing unit 22 of the image sensor 20, the processing unit 12 of the application processor 10, and the like illustrated in FIG. 1 is omitted.

As illustrated in FIG. 4, the processing unit 22 of the image sensor 20 includes a serializer (SRL) 221, a DCC circuit 222, and the like. The SRL 221 includes a multiplexer 221a.

For example, the SRL 221 converts video data (date) in various formats into serial data by the multiplexer 221a, and performs an output thereof to the DCC unit 23. The DCC circuit 222 is, for example, a circuit that outputs a clock signal (CLK) to the SRL 221, and adjusts a duty ratio of the pulse signal of the video data to a predetermined target value (such as an optimum value).

Note that in a case where the DCC circuit 222 cannot adjust the duty ratio of the pulse signal due to a design defect, an individual malfunction, a compatibility issue, or the like, or a result of the adjustment deviates, the duty ratio of the pulse signal can be corrected by correction of the duty ratio by the DCC unit 23. In addition, even in a case where there is a problem of deteriorating the duty ratio in a data path that is a signal path in and after the SRL 221, the duty ratio of the pulse signal can be corrected by the correction of the duty ratio by the DCC unit 23.

The DCC unit 23 includes a plurality of amplifiers 231, 232, and 233. For example, the DCC unit 23 corrects the duty ratio according to a voltage acquired by amplification of a differential voltage of an average pulse level (APL) of each of a positive electrode and a negative electrode of the pulse signal output from the transmission unit 24 to the transmission path 30.

The transmission unit 24 is a driver (DRV) including an amplifier 241. The transmission unit 24 amplifies the pulse signal (such as the pulse signal based on the video data, the adjustment pulse signal, or the like) by the amplifier 241, and performs an output thereof to the transmission path 30.

The duty measurement unit 25 includes a plurality of resistors 251 and 252 and a plurality of capacitors 253 and 254. For example, the duty measurement unit 25 generates the APL of each of the positive electrode and the negative electrode of the pulse signal output from the amplifier 241 to the transmission path 30, and performs an output thereof to the adjustment unit 26 and a comparator 272 of the memory unit 27.

The adjustment unit 26 is formed by a negative feedback connection between the DCC unit 23 and the switching unit 28. The adjustment unit 26 is configured by, for example, the negative feedback connection, and adjusts the duty ratio to the predetermined target value (such as the optimum value) when the input voltage is controlled in such a manner that the APLs of the positive and negative electrode signals are aligned.

The memory unit 27 includes a determination circuit 271, a comparator 272, a reference voltage generation unit 273, and a decoder 274. In the memory unit 27, for example, the comparator 272 compares the output from the duty measurement unit 25 with the reference voltage prepared in the memory unit 27, and the determination circuit 271 holds voltage information related to the control voltage at which the duty ratio becomes the target value. The reference voltage is generated by the reference voltage generation unit 273. For example, the reference voltage generation unit 273 generates the reference voltage on the basis of the voltage information processed by the decoder 274. The reference voltage generation unit 273 includes, for example, a ladder resistor 273a, a plurality of switches 273b, and the like.

The determination circuit 271 controls the switching unit 28 that selects the control voltage to be input to the DCC unit 23 and the amplifier 233 of the DCC unit 23 on the basis of flag information (Flag) from the duty detection unit 13 of the application processor 10. For example, the determination circuit 271 outputs a switch control signal (SWEN) to the switching unit 28 and outputs a correction instruction signal (Duty_EN) to the amplifier 233.

The switching unit 28 includes a plurality of switches 281 and 282. For example, the switching unit 28 switches the switches 281 and 282 under the control of the determination circuit 271, and switches the calibration path A1 and the memory path A2.

Such a circuit configuration is merely an example, and another circuit configuration may be used. A specific operation example based on the above-described circuit configuration will be described below.

### <1-5. Operation example of the circuit configuration example of the information processing system>

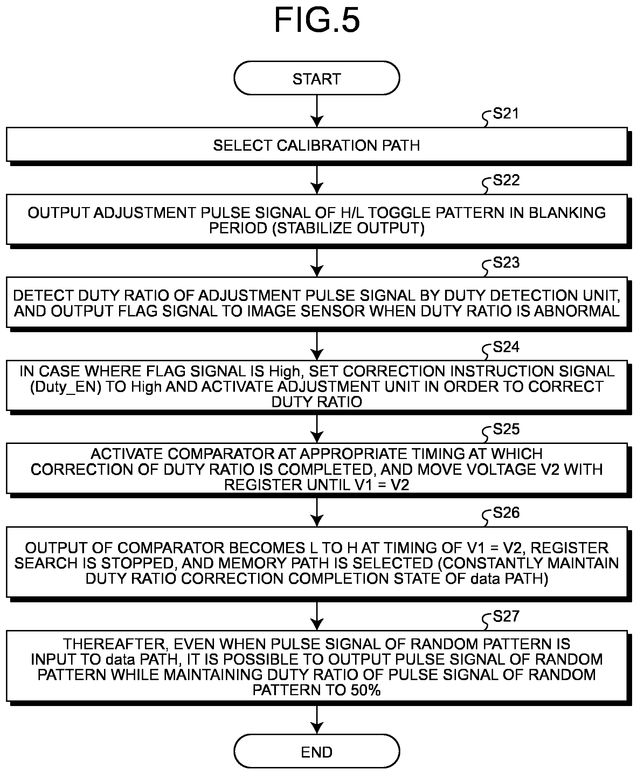

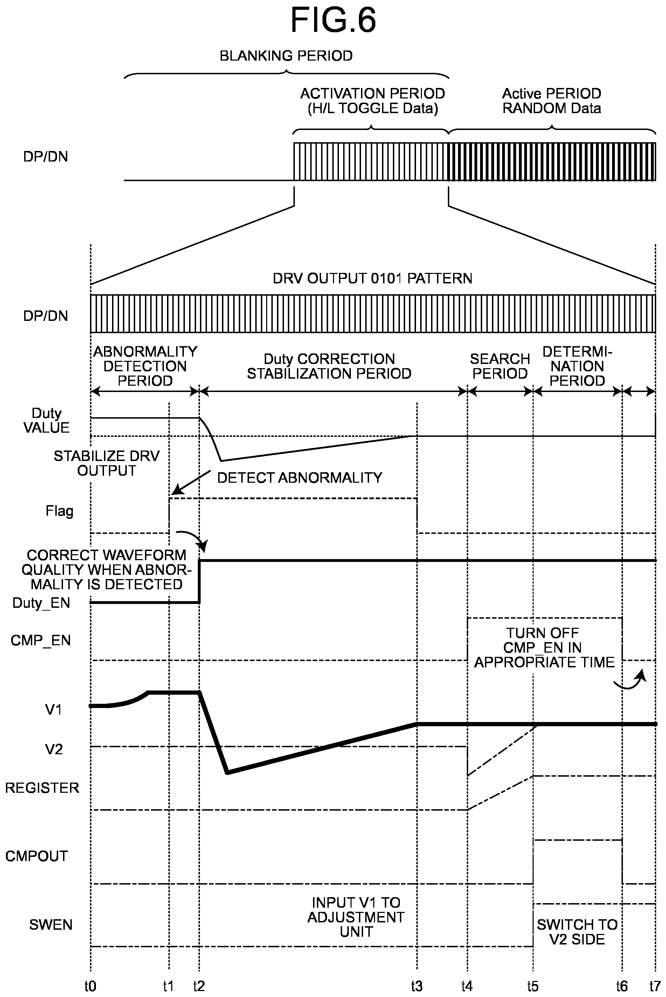

An operation example of the circuit configuration example of the information processing system 1 according to the present embodiment will be described with reference to FIG. 5 and FIG. 6. FIG. 5 is a flowchart illustrating a flow of the operation example of the circuit configuration example of the information processing system 1 according to the present embodiment. FIG. 6 is a timing chart illustrating signal timing of the circuit configuration example of the information processing system 1 according to the present embodiment.

As illustrated in FIG. 5, in Step S21, the switching unit 28 of the image sensor 20 selects the calibration path A1 by using the switches 281 and 282.

In Step S22, the transmission unit 24 of the image sensor 20 outputs the adjustment pulse signal of the H/L toggle pattern to the data path of the transmission path 30 in the blanking period (see a signal waveform of DP/DN illustrated in FIG. 6). In an abnormality detection period illustrated in FIG. 6, the adjustment pulse signal of the H/L toggle pattern (0101 pattern) is input to the data path and the output after the activation of the transmission unit 24 is stabilized.

In Step S23, the duty detection unit 13 of the application processor 10 detects the duty ratio of the adjustment pulse signal output from the transmission unit 24 of the image sensor 20, and outputs the flag signal (High) to the image sensor 20 when the duty ratio is abnormal (see a signal waveform of Flag illustrated in FIG. 6).

In Step S24, in a case where the flag signal is High (in a case where Flag is set), the memory unit 27 (determination circuit 271) of the image sensor 20 sets the correction instruction signal (Duty_EN) to High (Duty_EN = H) and activates the amplifier 233 of the DCC unit 23, that is, the adjustment unit 26 in order to correct the duty ratio (see a signal waveform of Duty_EN illustrated in FIG. 6). In the example of FIG. 6, timing at which Flag becomes High is t1, and timing at which Duty_EN becomes High is t2. A period from t0 to t2 is the abnormality detection period.

In the correction of the duty ratio, a voltage (LPF output voltage) V1 of the comparator 272 temporally changes in such a manner that an H:L period (High:Low) of DP/DN becomes 50%:50%, that is, the duty ratio becomes 50% (see a signal waveform of V1 illustrated in FIG. 6). In the example of FIG. 6, a voltage V1 starts changing at t2 and becomes stable at t3.

In Step S25, the memory unit 27 of the image sensor 20 activates the comparator 272 (CMP_EN) at appropriate timing at which the correction of the duty ratio is completed, and moves a voltage (HPF output voltage) V2 with a register until the voltage V1 of the comparator 272 and the voltage V2 become equal (see signal waveforms of CMP_EN, V1, V2, and register illustrated in FIG. 6). This operation is referred to as a register search. In the example of FIG. 6, the appropriate timing at which the correction of the duty ratio is completed is t4. A period from t2 to t4 is a Duty correction stabilization period (duty ratio correction stabilization period).

In Step S26, in the memory unit 27 of the image sensor 20, the output of the comparator 272 changes from Low to High (L → H) at timing at which the voltage V1 and the voltage V2 become equal (V1 = V2), and the register search is stopped (see signal waveforms of V1, V2, register, and CMP_OUT illustrated in FIG. 6). Furthermore, the switching unit 28 of the image sensor 20 selects the memory path A2 by using the switches 281 and 282 under the control of the determination circuit 271 of the memory unit 27 at the timing at which the voltage V1 and the voltage V2 become equal (V1 = V2) (see signal waveforms of V1, V2, and SWEN illustrated in FIG. 6). As a result, an input path of the voltage V1 is switched to an input path of the voltage V2. In the example of FIG. 6, the timing at which the voltage V1 and the voltage V2 become equal is t5. A period from t4 to t5 is a search period.

Note that the memory unit 27 of the image sensor 20 deactivates the comparator 272 in an appropriate time (see signal waveforms of CMP_EN and CMP_OUT illustrated in FIG. 6). In the example of FIG. 6, the appropriate time is t6. A period from t5 to t6 is a determination period.

By the operation example in Step S21 to S26 described above, creation of a buffer state in which a state in which the duty ratio of the pulse signal passing through the data path is corrected can be constantly maintained is completed. That is, the duty ratio correction completion state of the data path can be maintained constantly.

In Step S27, thereafter, even when the pulse signal of the random pattern (pulse signal based on the video data) is input to the data path, since the state in which the duty ratio is corrected can be maintained by the DC voltage that is the voltage V2, it is possible to output the pulse signal of the random pattern from the transmission unit 24 while maintaining the duty ratio of the pulse signal of the random pattern at the target value.

According to such an operation example, the adjustment pulse signal is output and the optimum value of the control voltage at which the duty ratio becomes the target value is searched for in the blanking period of the video data. In an RGB data communication period, the optimum value is set, the duty ratio is kept monitored and the search and the setting of the optimum value are repeated again when the duty ratio is abnormal, and the optimum value of the control voltage is continuously derived. Note that the adjustment pulse signal is output for each blanking period. As a result, since the optimum value of the control voltage is searched for in the blanking period of the video data, it is possible to set a target duty ratio without separately providing an idle period. In such a manner, high-speed data processing can be realized, and an appropriate duty ratio can be acquired.

Here, in the related art (see, for example, Patent Literature 1), adjustment of the duty ratio is irregular and it is not clear when the adjustment is performed again. Thus, it is not possible to follow a change in a use environment, and a data transfer error is generated. In addition, since it is necessary to separately provide an idle period in the related art, it is difficult to realize high speed. Furthermore, since a register that performs adjustment or setting is required, the number of elements is large and downsizing is difficult. Since there are many adjustment processes between a transmission unit 24 of an image sensor 20 and a reception unit 11 of an application processor 10, current consumption is large, and it is also difficult to save power.

On the other hand, according to the present embodiment, the optimum value of the control voltage can be searched for in the blanking period of the video data (such as RGB data), and the target duty ratio can be set without the idle period being separately provided. As a result, since it is possible to eliminate compression of the video data, that is, a step and a register that hinder an increase in speed, it is possible to process a large amount of data at high speed. In addition, since a register that performs adjustment or setting is unnecessary and an adjustment process between the transmission unit 24 of the image sensor 20 and the reception unit 11 of the application processor 10 is reduced, and downsizing and low power consumption can be achieved. This is also suitable for electronic equipment such as a mobile product, and it is also possible to realize cost reduction by reduction of an area of the circuit.

### <1-6. First modification example of an information processing system>

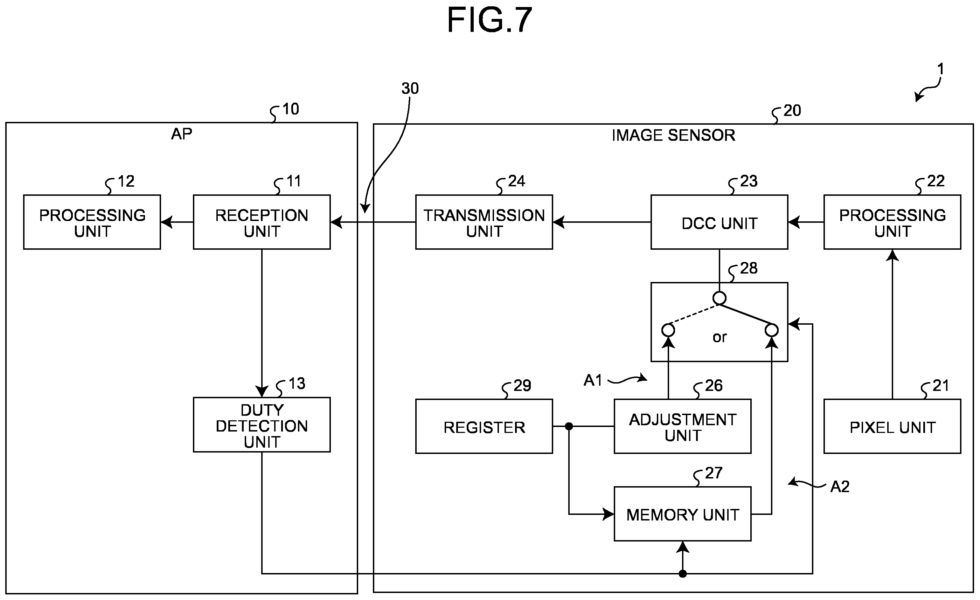

A configuration example of the information processing system 1 according to the first modification example will be described with reference to FIG. 7. FIG. 7 is a view illustrating a configuration example of an information processing system 1 according to the first modification example. The first modification example is basically the same as the above-described embodiment, and a difference therebetween will be described.

As illustrated in FIG. 7, in the information processing system 1 according to the first modification example, an image sensor 20 includes a register 29 instead of a duty measurement unit 25. The register 29 has correction information necessary for adjustment of a duty ratio. The adjustment unit 26 acquires the correction information from the register 29, and adjusts the duty ratio to a predetermined target value (such as an optimum value) on the basis of the acquired correction information. The register 29 functions as a storage unit.

The correction information is information related to correction necessary for setting the duty ratio to the predetermined target value. The correction information includes, for example, information indicating a correction value acquired in advance. The correction value is acquired experimentally (for example, by simulation) or logically in advance, for example. Note that the correction information may be changeable when a user such as a designer performs input operation on an input unit (not illustrated). As the input unit, for example, input devices such as keys and buttons can be used.

### <1-7. Second modification example of an information processing system>

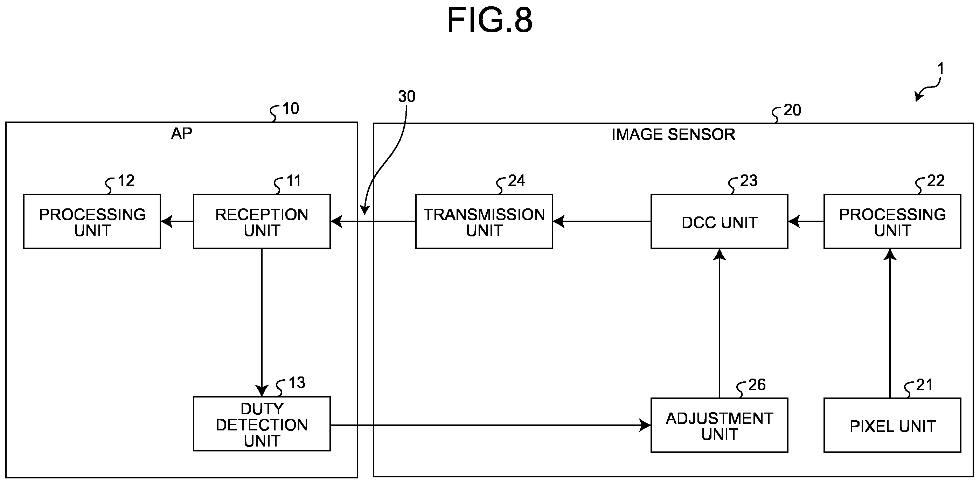

A configuration example of the information processing system 1 according to the second modification example will be described with reference to FIG. 8. FIG. 8 is a view illustrating the configuration example of the information processing system 1 according to the second modification example. The second modification example is basically the same as the above-described embodiment, and a difference therebetween will be described.

As illustrated in FIG. 8, in the information processing system 1 according to the second modification example, an image sensor 20 includes a pixel unit 21, a processing unit 22, a DCC unit 23, a transmission unit 24, and an adjustment unit 26. A duty detection unit 13 of an application processor 10 outputs a flag signal (High) to the adjustment unit 26 via a transmission path 30, and outputs correction information related to correction of a duty ratio. In a case where the flag signal is High, the adjustment unit 26 adjusts the duty ratio to a predetermined target value (such as an optimum value) on the basis of the correction information acquired from the duty detection unit 13.

The correction information is information related to correction necessary for setting the duty ratio detected by the duty detection unit 13 to a predetermined target value. The correction information includes, for example, information indicating a difference between the duty ratio detected by the duty detection unit 13 and the target value.

### <1-8. Third modification example of an information processing system>

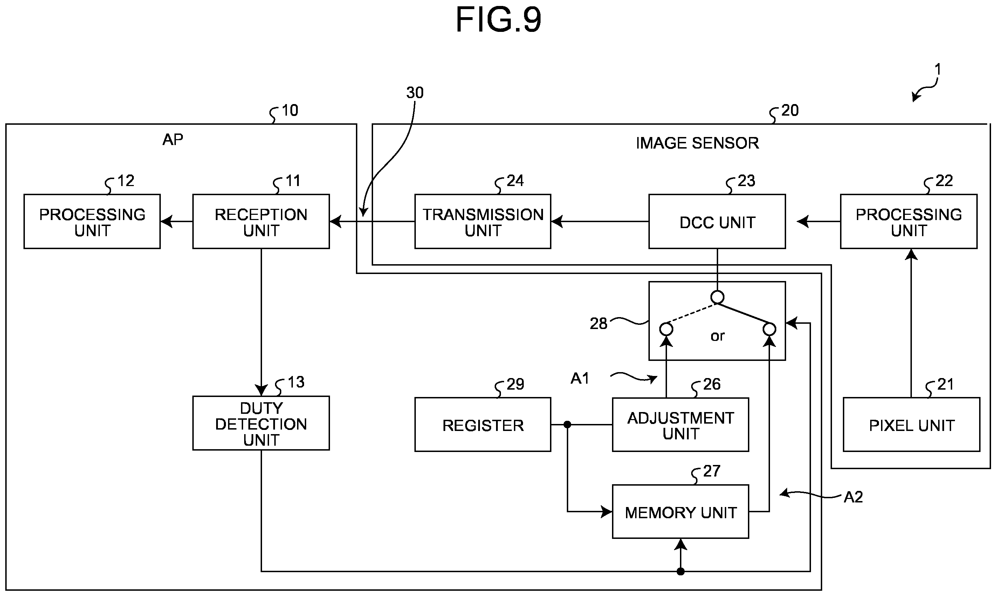

A configuration example of an information processing system 1 according to the third modification example will be described with reference to FIG. 9. FIG. 9 is a view illustrating the configuration example of the information processing system 1 according to the third modification example. The third modification example is basically the same as the first modification example, and a difference therebetween will be described.

As illustrated in FIG. 9, in the information processing system 1 according to the third modification example, an application processor 10 includes an adjustment unit 26, a memory unit 27, a switching unit 28, and a register 29 in addition to a reception unit 11, a processing unit 12, and a duty detection unit 13. An image sensor 20 includes a pixel unit 21, a processing unit 22, a DCC unit 23, and a transmission unit 24. Even with such a configuration, an effect similar to that of the above-described embodiment can be acquired.

### <1-9. Fourth modification example of an information processing system>

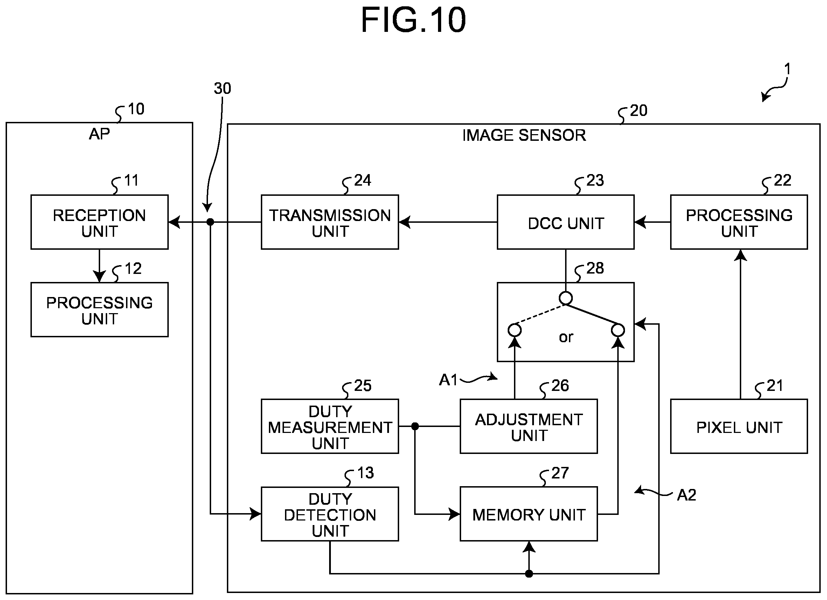

A configuration example of an information processing system 1 according to the fourth modification example will be described with reference to FIG. 10. FIG. 10 is a view illustrating the configuration example of the information processing system 1 according to the fourth modification example. The fourth modification example is basically the same as the above-described embodiment, and a difference therebetween will be described.

As illustrated in FIG. 10, in the information processing system 1 according to the fourth modification example, a duty detection unit 13 is provided not in an application processor 10 but in an image sensor 20. That is, the application processor 10 includes a reception unit 11 and a processing unit 12. The image sensor 20 includes the duty detection unit 13, a pixel unit 21, a processing unit 22, a DCC unit 23, a transmission unit 24, a duty measurement unit 25, an adjustment unit 26, a memory unit 27, and a switching unit 28. Even with such a configuration, an effect similar to that of the above-described embodiment can be acquired.

### <1-10. Action and effect>

As described above, according to the present embodiment (including the modification examples), the information processing system 1 includes the transmission unit 24 that transmits the adjustment pulse signal in the blanking period related to the video data, the detection unit (such as the duty detection unit 13) that detects that the duty ratio of the adjustment pulse signal transmitted by the transmission unit 24 is not a predetermined value, the adjustment unit 26 that acquires the correction value (such as the optimum value of the control voltage) in such a manner that the duty ratio of the adjustment pulse signal becomes the predetermined value (predetermined target value) in a case where the detection unit detects that the duty ratio of the adjustment pulse signal is not the predetermined value, and the correction unit (such as the DCC unit 23) that corrects the duty ratio of the pulse signal related to the video data on the basis of the correction value acquired by the adjustment unit 26 (see FIG. 1, FIG. 8, and the like). As a result, the adjustment pulse signal is output in the blanking period, the correction value at which the duty ratio becomes the predetermined value is acquired, and the duty ratio can be corrected on the basis of the correction value. Thus, it is possible to output the adjustment pulse signal, to acquire the correction value, and to correct the duty ratio on the basis of the correction value during the blanking period, and it is not necessary to separately provide the idle period for correcting the duty ratio. Thus, it is possible to realize high-speed data processing. In addition, even when abnormality is generated in the duty ratio due to a change in a use environment, the duty ratio can be repeatedly corrected in accordance with the detection of the abnormality. Thus, even when the use environment changes, the duty ratio can be appropriately corrected, and the appropriate duty ratio can be acquired.

Furthermore, the blanking period may be a blanking period for each frame of the video data. As a result, since the idle period for correcting the duty ratio is unnecessary, high-speed data processing can be reliably realized.

In addition, the correction value may be a correction voltage (such as the control voltage) for correcting the duty ratio of the adjustment pulse signal. As a result, the appropriate duty ratio can be reliably acquired.

Furthermore, the correction unit (such as the DCC unit 23) may maintain the corrected duty ratio during the active period in which the transmission unit 24 transmits the video data. As a result, the appropriate duty ratio can be reliably maintained in the active period, and high-speed data processing can be reliably realized.

In addition, the detection unit (such as the duty detection unit 13) may acquire the correction information related to the duty ratio of the adjustment pulse signal, and the adjustment unit 26 may acquire the correction value on the basis of the correction information acquired by the detection unit (see FIG. 8). As a result, the appropriate duty ratio can be reliably acquired.

Furthermore, the information processing system 1 may further include the duty measurement unit 25 that measures the duty ratio of the adjustment pulse signal (see FIG. 1 and the like), and the adjustment unit 26 may acquire the correction value in such a manner that the duty ratio measured by the duty measurement unit 25 becomes the predetermined value. As a result, the appropriate duty ratio can be reliably acquired.

Furthermore, the information processing system 1 may further include the memory unit 27 that holds the voltage information related to the voltage (such as the control voltage) at which the duty ratio measured by the duty measurement unit 25 becomes the predetermined value (see FIG. 1 and the like), and the correction unit (such as the DCC unit 23) may correct the duty ratio of the pulse signal on the basis of the voltage information. As a result, the appropriate duty ratio can be reliably acquired.

Furthermore, the information processing system 1 may further include the switching unit 28 that performs switching between the first signal path (such as the calibration path A1) from the duty measurement unit 25 to the adjustment unit 26 and the second signal path (such as the memory path A2) from the duty measurement unit 25 to the memory unit 27 (see FIG. 1 and the like). As a result, the appropriate duty ratio can be reliably acquired.

Furthermore, the information processing system 1 may include the processor (such as the application processor 10) including the detection unit (such as the duty detection unit 13), and the image sensor 20 including the transmission unit 24, the adjustment unit 26, the correction unit (such as the DCC unit 23), the duty measurement unit 25, the memory unit 27, and the switching unit 28 (see FIG. 1 and the like). Even with such a configuration, high-speed data processing can be realized, and the appropriate duty ratio can be acquired.

Furthermore, the information processing system 1 may include an image sensor 20 including a detection unit (such as the duty detection unit 13), a transmission unit 24, an adjustment unit 26, a correction unit (such as the DCC unit 23), a duty measurement unit 25, a memory unit 27, and a switching unit 28 (see FIG. 10). Even with such a configuration, high-speed data processing can be realized, and the appropriate duty ratio can be acquired.

Furthermore, the information processing system 1 may include the processor (such as the application processor 10) including the detection unit (such as the duty detection unit 13), and the image sensor 20 including the transmission unit 24, the adjustment unit 26, and the correction unit (such as the DCC unit 23) (see FIG. 1, FIG. 7, FIG. 8, and the like). Even with such a configuration, high-speed data processing can be realized, and the appropriate duty ratio can be acquired.

Furthermore, the information processing system 1 may include the processor (such as the application processor 10) including the detection unit (such as the duty detection unit 13) and the adjustment unit 26, and the image sensor 20 including the transmission unit 24 and the correction unit (such as the DCC unit 23) (see FIG. 9). Even with such a configuration, high-speed data processing can be realized, and the appropriate duty ratio can be acquired.

Furthermore, the information processing system 1 may include the image sensor 20 including the detection unit (such as the duty detection unit 13), the transmission unit 24, the adjustment unit 26, and the correction unit (such as the DCC unit 23) (see FIG. 10). Even with such a configuration, high-speed data processing can be realized, and the appropriate duty ratio can be acquired.

Furthermore, the information processing system 1 may further include the storage unit (such as the register 29) that holds the correction value, and the adjustment unit 26 may acquire the correction value from the storage unit (see FIG. 7 and FIG. 9). As a result, the appropriate duty ratio can be reliably acquired.

Furthermore, the information processing system 1 may include the processor (such as the application processor 10) including the detection unit (such as the duty detection unit 13), and the image sensor 20 including the transmission unit 24, the adjustment unit 26, the correction unit (such as the DCC unit 23), and the storage unit (such as the register 29) (see FIG. 7). Even with such a configuration, high-speed data processing can be realized, and the appropriate duty ratio can be acquired.

Furthermore, the information processing system 1 may include the processor (such as the application processor 10) including the detection unit (such as the duty detection unit 13), the adjustment unit 26, and the storage unit (such as the register 29), and the image sensor 20 including the transmission unit 24 and the correction unit (such as the DCC unit 23) (see FIG. 9). Even with such a configuration, high-speed data processing can be realized, and the appropriate duty ratio can be acquired.

### <2. Other embodiments>

The configuration, processing, and the like according to each of the above-described embodiments (examples and modification examples) may be implemented in various different forms other than the above-described embodiments. For example, the configuration, processing, and the like are not limited to the above-described examples, and may be in various modes. For example, among the pieces of processing described in the above embodiments, a whole or part of the processing described to be automatically performed can be manually performed, or a whole or part of the processing described to be manually performed can be automatically performed by a known method. In addition, the configurations, processing procedures, specific names, and information including various kinds of data or parameters in the above document or in the drawings can be arbitrarily modified unless otherwise specified. For example, various kinds of information illustrated in each of the drawings are not limited to the illustrated information.

In addition, the configuration, processing, and the like according to the above-described embodiments (examples and modification examples) are not necessarily configured physically in a manner illustrated in the drawings. That is, a specific form of distribution/integration of each device is not limited to what is illustrated in the drawings, and a whole or part thereof can be functionally or physically distributed/integrated in an arbitrary unit according to various loads and usage conditions.

Furthermore, the configurations, processing, and the like according to the above-described embodiments (examples and modification examples) may be appropriately combined. In addition, an effect described in the present description is merely an example and is not a limitation, and there may be a different effect.

### <3. Configuration example of electronic apparatus>

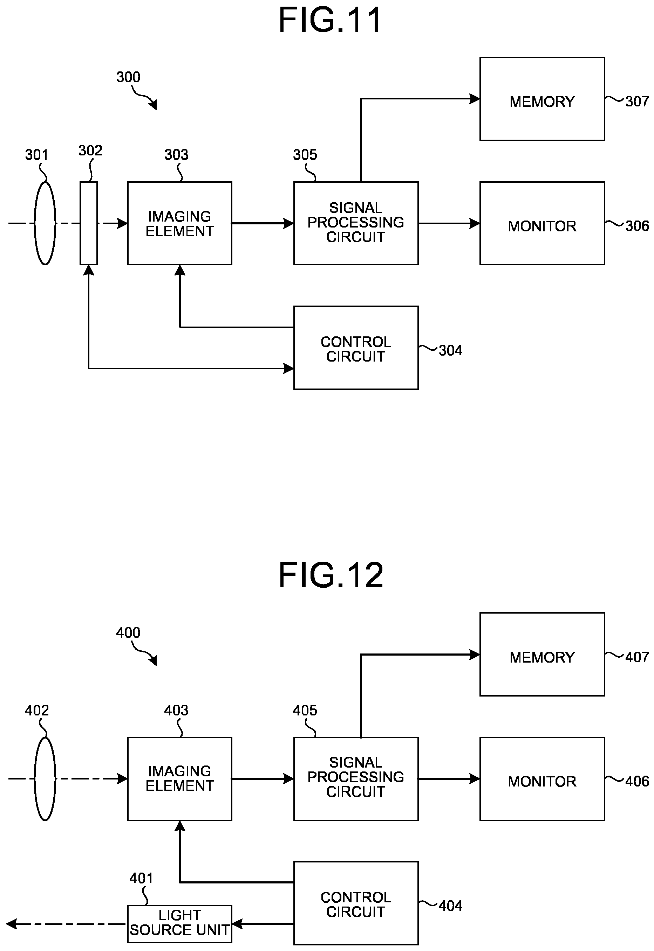

As an electronic apparatus to which the information processing system 1 according to the above embodiment (including modifications) is applied, an imaging device 300 and a distance measurement device 400 will be described with reference to FIGS. 11 to 12. For example, each of the imaging device 300 and the distance measurement device 400 uses the application processor 10 and the image sensor 20 of the information processing system 1 according to each of the above embodiments.

### <3-1. Imaging device>

The imaging device 300 to which the information processing system 1 according to the above embodiment is applied will be described with reference to FIG. 11. FIG. 11 is a diagram illustrating an example of a schematic configuration of the imaging device 300. The imaging device 300 is an example of the electronic apparatus to which the information processing system 1 according to the present embodiment is applied. Examples of the imaging device 300 include electronic devices such as a digital still camera, a video camera, a smartphone having an imaging function, and a mobile phone.

As illustrated in FIG. 11, the imaging device 300 includes an optical system 301, a shutter device 302, an imaging element (a solid-state imaging device) 303, a control circuit (drive circuit) 304, a signal processing circuit 305, a monitor 306, and a memory 307. The imaging device 300 can capture a still image and a moving image.

The optical system 301 includes one or a plurality of lenses. The optical system 301 guides light (incident light) from a subject to the imaging element 303 and forms an image on a light receiving surface of the imaging element 303.

The shutter device 302 is disposed between the optical system 301 and the imaging element 303. The shutter device 302 controls a light irradiation period and a light shielding period with respect to the imaging element 303 according to the control of the control circuit 304.

The imaging element 303 accumulates signal charges for a certain period according to light formed on the light receiving surface via the optical system 301 and the shutter device 302. The signal charges accumulated in the imaging element 303 is transferred in accordance with a drive signal (timing signal) supplied from the control circuit 304. For example, the imaging element 303 corresponds to the image sensor 20 according to the above embodiment.

The control circuit 304 outputs the drive signal for controlling a transfer operation of the imaging element 303 and a shutter operation of the shutter device 302 to drive the imaging element 303 and the shutter device 302.

The signal processing circuit 305 performs various types of signal processing on the signal charges output from the imaging element 303. An image (image data) obtained by performing the signal processing by the signal processing circuit 305 is supplied to the monitor 306 and also supplied to the memory 307. For example, the signal processing circuit 305 corresponds to the application processor 10 according to the above embodiment.

The monitor 306 displays a moving image or a still image captured by the imaging element 303 based on the image data supplied from the signal processing circuit 305. As the monitor 306, for example, a panel type display device such as a liquid crystal panel or an organic electro luminescence (EL) panel is used.

The memory 307 stores the image data supplied from the signal processing circuit 305, that is, image data of the moving image or the still image captured by the imaging element 303.

Also in the imaging device 300 configured in this manner, high-speed data processing can be realized and further the appropriate duty ratio can be acquired by applying the information processing system 1.

### <3-2. Distance measurement device>

The distance measurement device 400 to which the information processing system 1 according to the above embodiment is applied will be described with reference to FIG. 12. FIG. 12 is a diagram illustrating an example of a schematic configuration of the distance measurement device 400. The distance measurement device 400 is an example of the electronic apparatus to which the information processing system 1 according to the present embodiment is applied.

As illustrated in FIG. 12, the distance measurement device (distance image sensor) 400 includes a light source unit 401, an optical system 402, an imaging element (a solid-state imaging device) 403, a control circuit (drive circuit) 404, a signal processing circuit 405, a monitor 406, and a memory 407. The distance measurement device 400 can acquire a distance image according to a distance to a subject by projecting light from the light source unit 401 toward the subject and receiving light (modulated light or pulsed light) reflected from a surface of the subject.

The light source unit 401 projects light toward the subject. As the light source unit 401, for example, a vertical cavity surface emitting laser (VCSEL) array that emits laser light as a surface light source or a laser diode array in which laser diodes are arrayed on a line is used. Note that the laser diode array is supported by a predetermined drive unit (not illustrated), and is scanned in a direction perpendicular to the array direction of the laser diodes.

The optical system 402 includes one or a plurality of lenses. The optical system 402 guides light (incident light) from the subject to the imaging element 403 to form an image on a light receiving surface (sensor unit) of the imaging element 403.

The imaging element 403 stores signal charges according to the light of the image formed on the light receiving surface via the optical system 402. A distance signal indicating the distance obtained from a light reception signal (APD OUT) output from the imaging element 403 is supplied to the signal processing circuit 405. As the imaging element 403, for example, a solid-state imaging element such as an image sensor is used. For example, the imaging element 403 corresponds to the image sensor 20 according to the above embodiment.

The control circuit 404 outputs a drive signal (control signal) for controlling operations of the light source unit 401, the imaging element 403, and the like to drive the light source unit 401, the imaging element 403, and the like.

The signal processing circuit 405 performs various types of signal processing on the distance signal supplied from the imaging element 403. For example, the signal processing circuit 405 performs image processing (for example, histogram processing, peak detection processing, and the like) of constructing the distance image on the basis of the distance signal. An image (image data) obtained by performing the signal processing by the signal processing circuit 405 is supplied to the monitor 406 and also supplied to the memory 407. For example, the signal processing circuit 405 corresponds to the application processor 10 according to the above embodiment.

The monitor 406 displays the distance image captured by the imaging element 403 on the basis of the image data supplied from the signal processing circuit 405. As the monitor 406, for example, a panel type display device such as a liquid crystal panel or an organic EL panel is used.

The memory 407 stores the image data supplied from the signal processing circuit 405, that is, the image data of the distance image captured by the imaging element 403.

Also in the distance measurement device 400 configured in this manner, high-speed data processing can be realized and further the appropriate duty ratio can be acquired by applying the information processing system 1.

Furthermore, the information processing system 1 according to the above embodiment can be mounted on various electronic devices. For example, the information processing system 1 may be mounted on various electronic devices such as a notebook personal computer (PC), a mobile device (for example, a smartphone, a tablet PC, or the like), a personal digital assistant (PDA), a wearable device, and a music device in addition to the imaging device 300 and the distance measurement device 400.

### <4. Supplementary note>

Note that the present technology can also have the following configurations.
(1) An information processing system comprising:
   a transmission unit that transmits an adjustment pulse signal during a blanking period related to video data;
   a detection unit that detects that a duty ratio of the adjustment pulse signal transmitted by the transmission unit is not a predetermined value;
   an adjustment unit that acquires a correction value in such a manner that the duty ratio of the adjustment pulse signal becomes the predetermined value in a case where the detection unit detects that the duty ratio of the adjustment pulse signal is not the predetermined value; and
   a correction unit that corrects a duty ratio of a pulse signal related to the video data on a basis of the correction value acquired by the adjustment unit.
(2) The information processing system according to (1), wherein
   the blanking period is a blanking period for each frame of the video data.
(3) The information processing system according to (1) or (2), wherein
   the correction value is a correction voltage for correcting the duty ratio of the adjustment pulse signal.
(4) The information processing system according to any one of (1) to (3), wherein
   the correction unit maintains the corrected duty ratio during an active period in which the transmission unit transmits the video data.
(5) The information processing system according to any one of (1) to (4), wherein
   the detection unit acquires correction information related to the duty ratio of the adjustment pulse signal, and
   the adjustment unit acquires the correction value on a basis of the correction information acquired by the detection unit.
(6) The information processing system according to any one of (1) to (4), further comprising
   a duty measurement unit that measures the duty ratio of the adjustment pulse signal, wherein
   the adjustment unit acquires the correction value in such a manner that the duty ratio measured by the duty measurement unit becomes the predetermined value.
(7) The information processing system according to (6), further comprising
   a memory unit that holds voltage information related to a voltage at which the duty ratio measured by the duty measurement unit becomes the predetermined value, wherein
   the correction unit corrects the duty ratio of the pulse signal on a basis of the voltage information.
(8) The information processing system according to (7), further comprising
   a switching unit that performs switching between a first signal path from the duty measurement unit to the adjustment unit and a second signal path from the duty measurement unit to the memory unit.
(9) The information processing system according to (8), comprising
   a processor including the detection unit, and
   an image sensor including the transmission unit, the adjustment unit, the correction unit, the duty measurement unit, the memory unit, and the switching unit.
(10) The information processing system according to (8), comprising
   an image sensor including the detection unit, the transmission unit, the adjustment unit, the correction unit, the duty measurement unit, the memory unit, and the switching unit.
(11) The information processing system according to any one of (1) to (3), comprising
   a processor including the detection unit, and
   an image sensor including the transmission unit, the adjustment unit, and the correction unit.
(12) The information processing system according to any one of (1) to (3), comprising
   a processor including the detection unit and the adjustment unit, and
   an image sensor including the transmission unit and the correction unit.
(13) The information processing system according to any one of (1) to (3), comprising
   an image sensor including the detection unit, the transmission unit, the adjustment unit, and the correction unit.
(14) The information processing system according to any one of (1) to (3), further comprising
   a storage unit that holds the correction value, wherein
   the adjustment unit acquires the correction value from the storage unit.
(15) The information processing system according to (14), comprising
   a processor including the detection unit, and
   an image sensor including the transmission unit, the adjustment unit, the correction unit, and the storage unit.
(16) The information processing system according to (14), comprising
   a processor including the detection unit, the adjustment unit, and the storage unit, and
   an image sensor including the transmission unit and the correction unit.
(17) An information processing device comprising:
   a transmission unit that transmits an adjustment pulse signal during a blanking period related to video data;
   an adjustment unit that acquires a correction value in such a manner that a duty ratio of the adjustment pulse signal becomes a predetermined value according to detection information indicating that it is detected that the duty ratio of the adjustment pulse signal transmitted by the transmission unit is not the predetermined value; and
   a correction unit that corrects a duty ratio of a pulse signal related to the video data on a basis of the correction value acquired by the adjustment unit.
(18) An information processing method comprising:
   transmitting an adjustment pulse signal during a blanking period related to video data;
   detecting that a duty ratio of the transmitted adjustment pulse signal is not a predetermined value;
   acquiring a correction value in such a manner that the duty ratio of the adjustment pulse signal becomes the predetermined value in a case where it is detected that the duty ratio of the adjustment pulse signal is not the predetermined value; and
   correcting a duty ratio of a pulse signal related to the video data on a basis of the acquired correction value,
   transmitting, detecting, acquiring, and correcting being performed by an information processing system.
(19) Electronic equipment including a component included in the information processing system according to any one of (1) to (16).
(20) An information processing method including a step corresponding to a component included in the information processing system according to any one of (1) to (16).

### Reference Signs List

- 1: INFORMATION PROCESSING SYSTEM
- 10: APPLICATION PROCESSOR
- 11: RECEPTION UNIT
- 12: PROCESSING UNIT
- 13: DUTY DETECTION UNIT
- 20: IMAGE SENSOR
- 21: PIXEL UNIT
- 22: PROCESSING UNIT
- 23: DCC UNIT
- 24: TRANSMISSION UNIT
- 25: DUTY MEASUREMENT UNIT
- 26: ADJUSTMENT UNIT
- 27: MEMORY UNIT
- 28: SWITCHING UNIT
- 29: REGISTER
- 30: TRANSMISSION PATH
- 221: SRL
- 221a: MULTIPLEXER
- 222: DCC CIRCUIT
- 231: AMPLIFIER
- 232: AMPLIFIER
- 233: AMPLIFIER
- 241: AMPLIFIER
- 251: RESISTOR
- 252: RESISTOR
- 253: CAPACITOR
- 254: CAPACITOR
- 271: DETERMINATION CIRCUIT
- 272: COMPARATOR
- 273: REFERENCE VOLTAGE GENERATION UNIT
- 273a: LADDER RESISTOR
- 273b: SWITCH
- 274: DECODER
- 281: SWITCH
- 282: SWITCH
- 300: IMAGING DEVICE
- 303: IMAGING ELEMENT
- 305: SIGNAL PROCESSING CIRCUIT
- 400: DISTANCE MEASUREMENT DEVICE
- 403: IMAGING ELEMENT
- 405: SIGNAL PROCESSING CIRCUIT
- A1: CALIBRATION PATH
- A2: MEMORY PATH

## Claims

1. An information processing system comprising:
a transmission unit that transmits an adjustment pulse signal during a blanking period related to video data;
a detection unit that detects that a duty ratio of the adjustment pulse signal transmitted by the transmission unit is not a predetermined value;
an adjustment unit that acquires a correction value in such a manner that the duty ratio of the adjustment pulse signal becomes the predetermined value in a case where the detection unit detects that the duty ratio of the adjustment pulse signal is not the predetermined value; and
a correction unit that corrects a duty ratio of a pulse signal related to the video data on a basis of the correction value acquired by the adjustment unit.

2. The information processing system according to claim 1, wherein
the blanking period is a blanking period for each frame of the video data.

3. The information processing system according to claim 1, wherein
the correction value is a correction voltage for correcting the duty ratio of the adjustment pulse signal.

4. The information processing system according to claim 1, wherein
the correction unit maintains the corrected duty ratio during an active period in which the transmission unit transmits the video data.

5. The information processing system according to claim 1, wherein
the detection unit acquires correction information related to the duty ratio of the adjustment pulse signal, and
the adjustment unit acquires the correction value on a basis of the correction information acquired by the detection unit.

6. The information processing system according to claim 1, further comprising
a duty measurement unit that measures the duty ratio of the adjustment pulse signal, wherein
the adjustment unit acquires the correction value in such a manner that the duty ratio measured by the duty measurement unit becomes the predetermined value.

7. The information processing system according to claim 6, further comprising
a memory unit that holds voltage information related to a voltage at which the duty ratio measured by the duty measurement unit becomes the predetermined value, wherein
the correction unit corrects the duty ratio of the pulse signal on a basis of the voltage information.

8. The information processing system according to claim 7, further comprising
a switching unit that performs switching between a first signal path from the duty measurement unit to the adjustment unit and a second signal path from the duty measurement unit to the memory unit.

9. The information processing system according to claim 8, comprising
a processor including the detection unit, and
an image sensor including the transmission unit, the adjustment unit, the correction unit, the duty measurement unit, the memory unit, and the switching unit.

10. The information processing system according to claim 8, comprising
an image sensor including the detection unit, the transmission unit, the adjustment unit, the correction unit, the duty measurement unit, the memory unit, and the switching unit.

11. The information processing system according to claim 1, comprising
a processor including the detection unit, and
an image sensor including the transmission unit, the adjustment unit, and the correction unit.

12. The information processing system according to claim 1, comprising
a processor including the detection unit and the adjustment unit, and
an image sensor including the transmission unit and the correction unit.

13. The information processing system according to claim 1, comprising
an image sensor including the detection unit, the transmission unit, the adjustment unit, and the correction unit.

14. The information processing system according to claim 1, further comprising
a storage unit that holds the correction value, wherein
the adjustment unit acquires the correction value from the storage unit.

15. The information processing system according to claim 14, comprising
a processor including the detection unit, and
an image sensor including the transmission unit, the adjustment unit, the correction unit, and the storage unit.

16. The information processing system according to claim 14, comprising
a processor including the detection unit, the adjustment unit, and the storage unit, and
an image sensor including the transmission unit and the correction unit.

17. An information processing device comprising:
a transmission unit that transmits an adjustment pulse signal during a blanking period related to video data;
an adjustment unit that acquires a correction value in such a manner that a duty ratio of the adjustment pulse signal becomes a predetermined value according to detection information indicating that it is detected that the duty ratio of the adjustment pulse signal transmitted by the transmission unit is not the predetermined value; and
a correction unit that corrects a duty ratio of a pulse signal related to the video data on a basis of the correction value acquired by the adjustment unit.

18. An information processing method comprising:
transmitting an adjustment pulse signal during a blanking period related to video data;
detecting that a duty ratio of the transmitted adjustment pulse signal is not a predetermined value;
acquiring a correction value in such a manner that the duty ratio of the adjustment pulse signal becomes the predetermined value in a case where it is detected that the duty ratio of the adjustment pulse signal is not the predetermined value; and
correcting a duty ratio of a pulse signal related to the video data on a basis of the acquired correction value,
transmitting, detecting, acquiring, and correcting being performed by an information processing system.
